# EUROPEAN PATENT APPLICATION

(11) **EP 4 745 644 A2**
(43) Date of publication of application: **20.05.2026**
(21) Application number: 25216922.2
(22) Date of filing: 19.11.2025
(51) Int. Cl.: G02B 6/44

(54) **OPTICAL CONNECTIVITY SOLUTION FOR FIBER TO HOME NETWORK**

(30) Priority: 19.11.2024 IN 202411089581
(71) Applicant: Sterlite Technologies Limited, Gurugram, Haryana 122102 (IN)
(72) Inventor: KUMAR, Sunil, 122102 Gurugram (IN); SHAH, Mohammad Rafique, 122102 Gurugram (IN)
(74) Representative: Valet Patent Services Limited

(57) **Abstract**

The present disclosure relates to a fiber enclosure (300) for receiving and managing a plurality of optical fibers including a housing defining an interior volume, a plurality of input ports (308) provided on at least one of the sidewalls (304), a plurality of fanout units (310, 312) disposed within the housing, a multi-tiered adapter frame (402) comprising a stair arrangement removably mounted within the interior volume of the housing and and a plurality of optical fiber adapters (404). Further the multi-tiered adapter frame (402) includes a plurality of horizontally-extending step portions (412) separated by vertically-extending riser portions (430). Each of the horizontally-extending step portions (412) lie in a horizontal plane vertically offset from adjacent horizontally-extending step portions (412).

## Description

### TECHNICAL FIELD

The present application claims the benefit of Indian Application No. IN202411089581 titled "OPTICAL CONNECTIVITY SOLUTION FOR FIBER TO HOME NETWORK" filed by the applicant on 19th November 2024 which is incorporated herein by reference in its entirety.

Embodiments of the present disclosure relate to the field of wireless communication networks of optical fibres and optical fiber cable management, and in particular, relates to a fiber enclosure specifically configured for the reception and management of a plurality of optical fibers.

### Background Art

Optical fiber cables are essential components in fiber-to-home (FTTH) networks, enabling high-speed data transmission to residential users. Various methods and systems have been developed for distributing and managing these optical fiber cables within FTTH networks.

Current demand requires fiber enclosures that can manage extreme high-density applications, driven by exploding bandwidth needs and end-user proliferation. This creates a conflict: either the enclosure scales dramatically in size to preserve port accessibility and bend radius - rendering it impractical for space-constrained deployments (e.g., wall-mount, polemount, or underground enclosures) - or it remains compact, but at the severe cost of port inaccessibility, fiber microbending, and signal degradation. Some prior art mentions stair-type structures which merely provide passive shelving for cassette placement with rear- or side-facing ports requiring extraction for access.

This persistent failure demands a fundamentally new design that eliminates cassettes, enforces bend radius structurally, and maximizes port density, while providing accessibility in a compact enclosure.

### SUMMARY OF THE DISCLOSURE

Embodiments of the present disclosure relates to a cassette-free, tiered-adapter fiber enclosure that resolves the high-density conflict through a three-dimensional arrangement of staggered, front-facing adapter blocks. In particular, each block enforces an equal to 7.5 mm (or equal to 5 mm) minimum bend radius and route IBR directly from breakout to mass-fusion-ready 250 µm pitch arrays - preserving intermittent bonds without disruption. Further, it may deliver >6× port density versus conventional systems, may support 1:2 to 1:64 (preferably 1:4 to 1:32, more preferably 1:12 to 1:24) (more preferably 1:12 to 1:24) feeder-to-distribution ratios in a single compact unit, and may eliminate splice trays entirely.

In an aspect, a fiber enclosure (300) for receiving and managing a plurality of optical fibers is characterized by a housing with a base (302), sidewalls (304), and cover (314); input ports (308) on at least one sidewall receiving input cables (202) containing optical fiber bundles made of fibers bendable to 7.5 mm (or 5 mm) radius without substantial signal loss; fanout units (310, 312) inside the housing dividing each bundle into individual fibers; and a removably mounted multi-tiered adapter frame (402) forming a stair arrangement with horizontally-extending step portions (412) separated by vertically-extending riser portions (430), each step portion offset in plane from adjacent ones, and optical fiber adapters (404) mounted thereon such that all adapter ports (422a) face a common front access direction (A) at a mounting angle of 80°-110° relative to the step portion, with riser portions being angled (45°-135°) or curved (non-linear surface).

According to an aspect of the present disclosure, the fiber enclosure with multi-tiered adapter frames with vertically offset step portions (10 - 13 mm) and step depth (15-26.5 mm), enabling up to >6× port density and front access using standard connectors without cassettes or trays.

According to the second aspect of the present disclosure, the fiber enclosure has a single-piece integrated adapter block (8-12 sub-adapters, integrally molded) with snap-fit removable mounting on step portions, eliminating individual adapter alignment and enabling feeder/distribution segregation. In particular, the adapter ports are oriented in a common front access that is 80°-100° (preferably perpendicular).

In accordance with an embodiment of the present disclosure, the fiber enclosure with IBR-preserving breakout assemblies with furcation tubes outputting bonded ribbon segments, enabling non-disruptive mass fusion at 250 µm pitch without bond damage.

Further, the fiber enclosure with optimized fiber lengths such that feeder paths are 260 - 470 mm, distribution paths are 260 - 280 mm, structurally enforced by fanout placement beneath the stair frame. Furthermore, the fiber enclosure has vertically stacked, pivotable splice holder plates for mass fusion splicing in a dedicated region, fully accessible without disassembly.

According to the third aspect of the present disclosure, the fiber enclosure has wider end steps with mounting features and removable, vertically offset cable routing fingers on every step, enabling tool-free frame installation and segregated routing. Further, the fiber enclosure has a scalable 1:2 to 1:64 (preferably 1:4 to 1:32, more preferably 1:12 to 1:24) feeder-to-distribution ratio in a single compact enclosure using mixed-density input ports and tierspecific adapter blocks.

According to the fourth aspect of the present disclosure, each optical fiber adapter is a single-piece integrated adapter block comprising 8 to 12 integrally molded sub-adapters, removably mounted directly on the step portions without secondary fixtures. Further, the mounted adapter blocks are designated as feeder adapter blocks and distribution adapter blocks , with the number of distribution blocks substantially exceeding feeder blocks to match high split ratios. Furthermore, each sub-adapter has a second port facing the base and a first port facing the cover; the multi-tiered frame providing vertical segregation of fiber routing paths from fanouts to second ports, preventing crossover and ensuring bend control.

According to the fifth aspect of the present disclosure, at least two step portions - typically the first and last have greater width than others and include mounting features for removable attachment of the entire frame to the enclosure. The wider first or last step supports at least two adapter blocks, one being a feeder block.

In accordance with an embodiment of the present disclosure, the fiber enclosure where each step portion has attachment features to which cable routing fingers are removably attached, with fingers on adjacent steps vertically offset to create layered, non-overlapping routing channels..

According to the sixth aspect of the present disclosure, the input cables have Intermittently Bonded Ribbon (IBR) bundles (204) where optical fibers are bonded intermittently in a staggered pattern, preserving rollable deployment and mass fusion capability. The fiber enclosure with Breakout assemblies coupled to input ports each include a housing with one input opening for an IBR bundle and multiple through holes outputting bond-preserved IBR segments in furcation tubes, enabling non-disruptive breakout without damaging intermittent bonds.In accordance with the seventh aspect of the present disclosure, where each distribution fanout unit has ribbonized fiber input at one end and individual fibers exiting through holes directly mated to distribution adapter second ports.

According to the eight aspect of the present disclosure, the fiber enclosure with a splicing region has pivotably connected splice holder plates stacked vertically. Further, each holding multiple mass fusion splice holders, allowing high-density splicing with full accessibility.

In accordance with the ninth aspect of the present disclosure, the adapter frame has a multi-tiered stair body with wider end steps. In particular, the adapters are mounted perpendicularly to step surfaces, and mounting features on wider steps for tool-free enclosure integration. Further, the frame receives single-piece integrated adapter blocks secured via snap-fit mechanisms on step portions. The snap-fit mounting enables rapid block installation and replacement without tools.

According to the tenth aspect of the present disclosure, the wider first or last step accommodates at least two adapter blocks, including one feeder block, maximizing input capacity at frame extremities. Further, each step has attachment features for removable cable routing fingers, with vertical offset between fingers on adjacent steps, forming a 3D segregated routing lattice that enforces bend radius and prevents tangling.
The foregoing objectives of the present disclosure are attained by employing a fiber enclosure specifically configured for the reception and management of a plurality of optical fibers.

### BRIEF DESCRIPTION OF DRAWINGS

The following brief description of the accompanying drawings is provided to clarify the technical solutions in the embodiments of the present disclosure or the prior art. The drawings merely illustrate some embodiments, and other implementations can be derived by a person of ordinary skill in the art without creative effort. All such embodiments and implementations fall within the protection scope of the present disclosure.
Fig. 1 is a pictorial snapshot illustrating a front view of a fiber enclosure, in accordance with an aspect of the present disclosure.
Fig. 2 is a pictorial snapshot illustrating a side view of a fiber enclosure with multiple fiber management components, in accordance with an aspect of the present disclosure;
Fig. 3 is a pictorial snapshot illustrating a perspective view of one of the input cables in accordance with an aspect of the present disclosure;
Fig. 4 is a pictorial snapshot illustrating a detailed view of IBR bundle segments representing the structure of intermittently bonded ribbon optical fibers in accordance with an aspect of the present disclosure;
Fig. 5 is a pictorial snapshot illustrating a schematic view of an IBR bundle separation process within a breakout assembly in accordance with an aspect of the present disclosure;
Fig. 6 - 7 are a pictorial snapshots illustrating a side views of a multi-tiered adapter frame in accordance with an aspect of the present disclosure;
Fig. 8 is a pictorial snapshot illustrating a perspective view of the fiber enclosure before the mounting of Multi-tiered adapter frames in accordance with an aspect of the present disclosure;
Fig. 9 is a pictorial snapshot illustrating a perspective view of a fanout unit in accordance with an aspect of the present disclosure;
Fig.10 is a pictorial snapshot illustrating a perspective view of the fiber enclosure representing pivotable splice holder plates in accordance with an aspect of the present disclosure;
Fig. 11 is a pictorial snapshot illustrating a perspective view of the multi-tiered adapter frame representing mounting features and adapter block openings according to embodiments as disclosed herein
Fig. 12A & 12B are pictorial snapshots illustrating a side view of the single-piece integrated adapter block representing mounting features in accordance with an aspect of the present disclosure;
Fig. 13, 14, 15 are pictorial snapshots illustrating a perspective view mounting of single-piece adapter block onto the multi-tiered adapter frame in accordance with an aspect of the present disclosure;
Fig. 16 & 17 are a pictorial snapshots illustrating a side view of the adapter frame representing cable routing fingers arranged in a vertically offset manner in accordance with an aspect of the present disclosure;
Fig. 18 is a pictorial snapshot illustrating a perspective view of a multi-tiered adapter frame with single-piece integrated adapter blocks.

The accompanying drawings illustrate the fiber enclosure, using consistent reference letters for corresponding parts across figures. The figures are provided as exemplary embodiments only and do not limit the scope of the present disclosure. Furthermore, the figures are not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

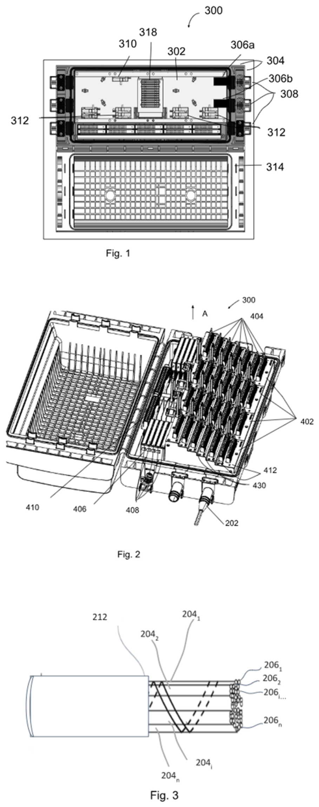

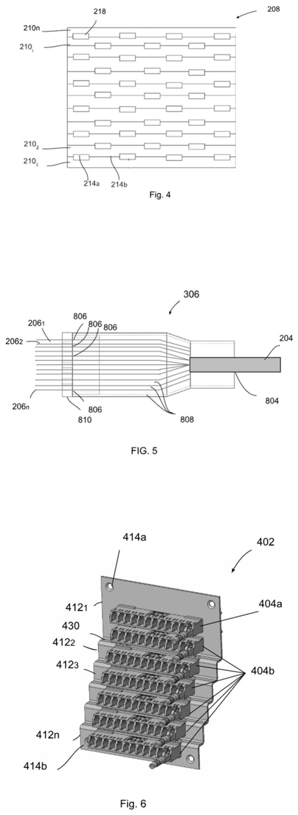

Fig. 1 and Fig. 2 are pictorial snapshots illustrating a front view and side view of a fiber enclosure with multiple fiber management components, in accordance with an aspect of the present disclosure. The fiber enclosure (300) which is designed for the distribution and management of optical fibers originating from a plurality of input cables (202) (as detailed in Fig. 3 and Fig. 4). While the figures visually show a single input cable (202) for clarity, the enclosure (300) is configured to manage multiple cables via its input ports (308). This enclosure is typically used in high-density telecommunication environments. The input cables (202) may include both feeder input cables and distribution input cables.

In accordance with an embodiment of the present disclosure, the fiber enclosure (300) comprises a housing that includes a base (302), a plurality of sidewalls (304), and a removable or openable cover (314). One or more input ports (308) are situated on the sidewalls (304) to allow the introduction of input cables (202), which contain optical fiber bundles (204). Inside the housing, fanout units (310, 312) are arranged to divide the incoming fiber bundles into individual optical fibers for further routing.

In particular, the housing cover (314) is secured to the base (300) via a latch mechanism (not shown) that engages a corresponding strike element on the base (302). Moreover, the latch release actuator is only accessible when the cover (314) is moved to a partially opened position. When the cover (314) is in the fully closed position, the release actuator is mechanically blocked by a concealing flange, which is an integrated structural portion of the cover (314).

In accordance with an embodiment of the present disclosure, the plurality of fanout units (310, 312) includes at least one feeder fanout unit (310) and a plurality of distribution fanout units (312). In particular, the feeder fanout unit (310) is configured to divide the fibers of the feeder input cable into individual fibers for further termination. Further, each distribution fanout unit (312) is configured to divide the fibers of the distribution input cable into individual fibers for further termination.

In accordance with an embodiment of the present disclosure, the fiber enclosure (300) housing comprises a plurality of breakout assemblies (306a, 306b) coupled to the input ports (308). Further, each breakout assembly (306a, 306b) is configured to divide an IBR bundle (204) into a plurality of IBR bundle segments (2061, 2062, ...206i, ...206n) while preserving intermittent bonding within each IBR (208) forming part of the IBR bundle segment (206).

It is to be explicitly understood that the scope of this patent specification is not limited to IBR (Intermittently Bonded Ribbon) optical fiber cables. Rather, the described fiber enclosure (300) and its components are universally compatible with any suitable optical fiber cable and bundle configuration, including, but not limited to, loose tube, fully bonded ribbon, and flat cables.

In alternative embodiments, the optical fibers from the incoming fiber bundles (204) can be fed directly to the fanout units (310, 312) or other fiber management components, bypassing the breakout assembly (306) entirely.

In accordance with an embodiment of the present disclosure, the plurality of single-piece integrated adapter blocks (404) are mounted on a plurality of step portions (412) (412) of a plurality of multi-tiered adapter frames (402) (explained below) provided within the housing of the fiber enclosure (300). In particular, each single-piece integrated adapter block (404) is mounted perpendicularly to the surface of a respective step portion (412). Further, the mounting angle is perpendicular, wherein the central axis of the adapter block (404) is oriented substantially at 90° to the plane of the step portion (412). Alternatively, the mounting angle is angled, being oriented at approximately 80° or 100° relative to the step portion (412). These angled configurations enable the adapter ports (422a) of the adapter block (404) to face toward a front access direction (A) of the assembly, allowing users to perform insertion, removal, and inspection operations from the front side without disturbing adjacent connections.

In yet another embodiment of the present disclosure, the adapter block (404) is mounted on a curved or non-linear mounting surface, wherein the curvature is defined along an arc or contoured profile that gradually transitions between the riser portion (430) and the step portion (412). Further, the curved mounting configuration provides a smooth alignment path for the incoming or outgoing optical fiber, maintaining the required minimum bend radius (e.g., 7.5 mm (or 5 mm) for G.657.A2 fibers) while preserving a compact geometric profile.

In accordance with an embodiment of the present disclosure, each single-piece integrated adapter block (404) contains between 8 and 12 integrally molded sub adapters, thereby providing multiple connection ports within a condensed structure. In particular, each of the sub adapters is a dual-port sub adapter configured to allow optical coupling between two connectors. Further, the single-piece integrated adapter blocks (404) are aligned such that one of the ports (422a) of each sub adapter (422) is accessible from a common front access direction (A), allowing high-density patching operations.

In accordance with an embodiment of the present disclosure, the fiber enclosure is configured to house a splitter bulkhead unit (406) formed by the plurality of splitter cassettes (408) mounted in the frame (422).

In accordance with an embodiment of the present disclosure, within the fiber enclosure (300), connector holders (410) are provided to store unused connectors from splitter outputs. Fig. 3 is a pictorial snapshot illustrating a perspective view of one of the input cables in accordance with an aspect of the present disclosure. Each input cable (202) of the one or more input cables (202) comprises at least one intermittently bonded ribbon (IBR) bundle (204₁, 204₂,...204ᵢ, ...204ₙ) housed in a protective jacket (212). Moreover, each IBR bundle (204) comprises one or more IBR bundle segments (206₁, 206₂, ...206ᵢ, ...206ₙ) bunched together. Further, each IBR bundle segment (206) comprises at least one IBR (208). It may, however, be noted that each IBR bundle (204) comprises the plurality of IBRs (208).

Fig. 4 is a pictorial snapshot illustrating a detailed view of IBR bundle segments representing the structure of intermittently bonded ribbon optical fibers in accordance with an aspect of the present disclosure. In particular, a plurality of IBRs (208) are enclosed inside the input cable (200) that require high fibre counts within less installation space. Moreover, the IBR (208) is mechanically robust. In addition, the IBR (208) is capable of handling and manufacturing operations due to the strong mechanical strength. Further, the IBR (208) is flexible. The flexibility of the IBR (208) allows the IBR (208) to roll easily.

In accordance with an embodiment of the present disclosure, the IBR (208) comprises 12 optical fibers (210₁, 210₂, ... 210ᵢ, ... 210ₙ) where the adjacent optical fibers are bonded intermittently with a matrix material in a staggered bonding pattern such that pitch at a bonded region (214ₐ) is in the range of 150 to 250 micrometers. The pitch, defined as the center-to-center distance between adjacent fibers in the bonded region of the IBR cable, is maintained in the range of 150 to 250 µm. This range ensures precise fiber alignment, which is essential for low-loss mass fusion splicing and compatibility with splicing tools. A pitch below 150 µm risks microbending and damage, while a pitch above 250 µm introduces alignment and handling issues Further, the plurality of optical fibers (210₁, 210₂, ... 210ᵢ, ... 210ₙ) may comprise an unbonded region (214_{b}). Furthermore, it may be noted that the IBR (208) can comprise more than 12 optical fibers.

In the staggered bonding pattern, instead of being continuously bonded together, the optical fibers are joined at specific, offset points along their length. This creates an IBR cable that is less rigid than a traditional, continuously bonded ribbon cable. The intermittent, staggered points act as hinges and allow IBR cable to bend and flex more easily
In accordance with an embodiment of the present disclosure, an IBR (208ᵢ) may comprise plurality of optical fibers (210₁, 210₂, ... 210ᵢ, ... 210ₙ), where the adjacent optical fibers are arranged in parallel and bonded intermittently with a matrix material in a staggered bonding pattern such that pitch (218) at a bonded region (214ₐ) is in the range of 150 to 250 micrometers.

In accordance with an embodiment of the present disclosure, the optical input cable may comprise optical fibers of the ITU-T G.657.A2 category. The G.657.A2 fiber is selected to ensure reliable optical performance under compact routing conditions within fiber enclosure (300). The G.657.A2 fiber provides a minimum allowable bend radius of approximately 7.5 mm (or 5 mm) at the fiber centerline, enabling the fiber to be routed along curved guiding surfaces or riser portions of the adapter frame without exceeding its mechanical or optical limits. This characteristic allows the overall assembly to achieve high packing density while maintaining low insertion loss and long-term durability.

Further, the enclosure structurally enforces usage of optical fibers with minimum optical fiber bend radius of 7.5 mm (G.657.A2) or 5 mm (G.657.B3). The horizontally-extending step portions (412) of depth D = 15-26.5 mm are vertically offset by riser portions (430) of height H = 10-13 mm disclosure may not be bound by the theory including the minimum enforceable bend radius at the step-riser transition is: Rₘᵢₙ ≥ (D² + H²)/(2H)

For G.657.A2 compliance (≥7.5 mm):
- Minimum claimed geometry D = 15 mm, H = 10 mm: Rₘᵢₙ = (225 + 100)/20 = 325/20 ≈ 16.25 mm → > 7.5 mm (safe margin);
- D = 7 mm, H = 7 mm: Rₘᵢₙ = 98/14 = 7.00 mm → < 7.5 mm → VIOLATION;
D = 6 mm, H = 6 mm: Rₘᵢₙ = 72/12 = 6.00 mm → < 7.5 mm → VIOLATIONFor G.657.B3 compliance (≥5 mm):
- Same minimum claimed geometry D = 15 mm, H = 10mm mm: Rₘᵢₙ ≈ 16.25 mm → >> 5 mm (>3× margin);
- D = 5 mm, H = 5 mm: Rₘᵢₙ = 50/10 = 5.00 mm → = 5 mm (limit case, no margin);
- D = 4.5 mm, H = 4.5 mm: Rₘᵢₙ = 40.5/9 = 4.50 mm → < 5 mm → VIOLATION;
- D = 4 mm, H = 4 mm: Rₘᵢₙ = 32/8 = 4.00 mm → < 5 mm → VIOLATION.

The lower bounds (D ≥ 15 mm, H ≥ 10 mm) are design-optimized to guarantee Rₘᵢₙ ≥ 15.5 mm at the minimum configuration - far exceeding both standards and accounting margin of safety for practical field usage.

Fig. 5 is a pictorial snapshot illustrating a schematic view of an IBR bundle separation process within a breakout assembly (306) in accordance with an aspect of the present disclosure. The breakout assembly includes a housing (802) with an opening (804) to receive the IBR bundle (204) and multiple through holes (806). These holes output the resulting IBR bundle segments (206), typically groups of 4 to 48 fibers, into furcation tubes (not shown). During the breakout process the bonding between the fibers within each IBR bundle segment remains intact during subdivision, thus maintaining fiber integrity and enhancing operational reliability once the segments are protected by the furcation tubing. In one embodiment, the through holes (806) are arranged in staggered rows, with each row corresponding to a segment of the IBR bundle. Each through hole has an outer diameter of approximately 3 mm and is spaced approximately 5 mm apart. This specific arrangement facilitates the smooth routing of the IBR segments, prevents contact between them, and structurally avoids cracks between the through holes. Furthermore, the housing of the breakout assembly may consist of a base part and a cover part (not shown). The base part incorporates slots (808) designed to align the IBR bundle segments. When the cover part is closed, its featured projections press the IBR bundle segments securely into these slots. This mechanical arrangement ensures the precise positioning of the IBR segments relative to the staggered rows of through holes (406), guiding each segment toward its appropriate hole and preventing crossing, tangling, or misalignment during the breakout process. The opening (804) of the breakout assembly (306) is sized to accommodate an IBR bundle (204) with a fiber count ranging from 12 to 10,800 fibers, with 12 to 288 fibers being the preferred range.

In accordance with an embodiment of the present disclosure, the housing of the breakout assembly (306) may further comprise an integral strain relief mechanism configured to secure the IBR bundle (204) and furcation tubes for protecting the IBR bundle segments (2061, 2062, ...206i, ...206n).

In accordance with an embodiment of the present disclosure, the furcation tubes (not shown) are used at the plurality of through holes (806) of the breakout assembly (306) to protect the IBR bundle segments. Further, the number of furcation tubes is equal to the number of through holes (806) of the breakout assembly (306) such that each furcation tube houses an IBR bundle segment (206). So, if there are 12 through holes in the breakout assembly to output 12 IBR bundle segments then there will be 12 furcation tubes for enclosing each IBR bundle segment.

In accordance with an embodiment of the present disclosure, the one or more breakout assemblies (306) may afford the advantage of portability to different closures/applications due to the fiber breakout ruggedness. The housing may be cylindrical housing or a rectangular housing or conical housing or the like.

In accordance with an embodiment of the present disclosure, during the separation process, the IBR bundle (204) is guided through the opening (804) into the base part of the breakout housing. The base part includes molded slots that correspond to the nominal width and geometry of each IBR sub-ribbon segment. As the bundle is laid into these slots, the slots gently guide and laterally separate the individual IBR bundle segments without exerting shear or torsional forces on the bonded interfaces between fibers. The staggered arrangement of through holes (806) further facilitates gradual spatial separation, allowing each segment to be routed out individually without disturbing the adjacent segment.

Upon closure of the cover part onto the base part, projections on the cover apply a uniform and distributed pressure onto an outer jacket portion of the IBR bundle, not onto the fiber bond lines themselves. This ensures that the intermittent bonding regions remain intact and that no peeling or delamination occurs at the bonded zones. The mechanical interaction between the projections and the slots provides both alignment and strain relief to the fibers as they transition from the bunched configuration into individual furcation tubes.

In an exemplary example, in the case of a 144F (fiber) IBR: the breakout assembly (306) separates the bundle into twelve 12-fiber IBR segments. Each 12-fiber IBR segment exits through a dedicated through hole (806), maintaining the original 12F IBR intermittent bonding pattern. The separated IBR segments are then routed into twelve furcation tubes, which provide mechanical protection and maintain proper bend radius control.

In accordance with an embodiment of the present disclosure, the same structural principles, including base slots, cover projections, and through holes, are applied to the breakout assembly when the input cable utilizes 12F or 16F IBRs.

In all cases, the intermittent bonding between adjacent optical fibers is preserved due to: 1. controlled mechanical separation - the slots are designed to provide lateral guidance without exceeding the bonding strength threshold. 2. cover projections and staggered through holes distribute mechanical loads uniformly as the fibers transition into their respective furcation tubes.

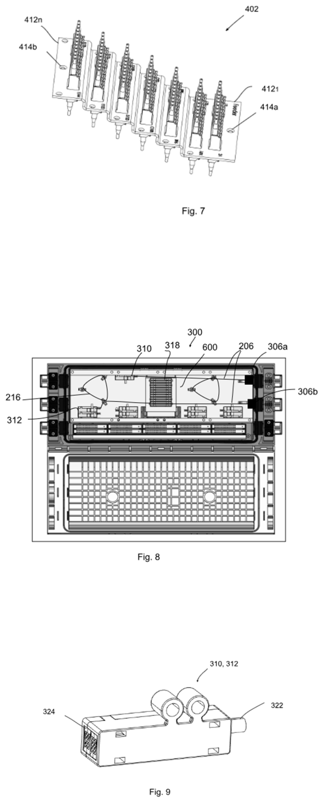

Figs. 6 and 7 illustrate the multi-tiered adapter frame (402), a structure designed to support and organize numerous optical fiber adapters within the fiber enclosure (300). The frame is constructed with a series of alternating step portions (412), which act as horizontal surfaces for the adapters, and riser portions (430), which interconnect adjacent steps, creating a stair-like, tiered structure. This configuration enables a high-density adapter arrangement in a compact volume while ensuring adequate spacing for connector handling and organized fiber management. The riser portions (430) are contoured to maintain a controlled vertical offset and a radius of curvature sufficient to meet the minimum bend radius required for bend-insensitive fibers (e.g., 7.5 mm or 5 mm for G.657.A2), thus minimizing micro-bending losses and stress. The stepped arrangement provides both ergonomic and functional benefits, facilitating easy access, visual inspection, and improved cable organization.

The dimensions of the structure are precisely controlled for optimal performance. The vertical offset between adjacent step portions, defined by the riser height (430), is maintained between 10 mm and 13 mm (preferably 11.7 mm). This minimum height (at least 10 mm) is important, as testing shows lower heights cause unacceptable signal degradation by forcing the fiber into a tighter bend than the minimum radius. Furthermore, the width of the non-end step portions is maintained between 15 mm and 26.5 mm (preferably 25.7 mm). This width ensures both optimal horizontal density and port accessibility, and guarantees the fiber bend radius exceeds the minimum; experimental results confirm bending attenuation remains below acceptable limits (e.g., 0.25dB). Regarding adapter placement, the first step portion (4121) is wider than the others to accommodate two single-piece integrated adapter blocks (404): one dedicated as a feeder adapter block (404a) and the other as a distribution adapter block (404b). Additional distribution adapter blocks are mounted on the remaining steps. This configuration achieves a feeder-to-distribution port ratio of approximately 1:6 within a single frame, maximizing vertical space utilization and ensuring clear functional separation. The multi-tiered adapter frame (402) is removably secured within the fiber enclosure (300) via mounting features (414) located on the first (4121) and last (412n) step portions, which are configured to receive fastening elements orthogonally for simplified installation and removal.

In accordance with an embodiment of the present disclosure, the multi-tiered adapter frame (402) is adaptable to different port capacity and usage requirements. Without limitation, in one exemplary embodiment, the stair-shaped frame (402) is configured to mount a total of one feeder adapter block (404a) and six distribution adapter blocks (404b). In another exemplary embodiment, the multi-tiered adapter frame (402) is configured to mount a total of two feeder adapter blocks (404a) and five distribution adapter blocks (404b).

Both the feeder adapter block (404a) and the distribution adapter block (404b) are passive optical devices configured to couple two optical fiber connectors, such as but not limited to SC-type or LC-type connectors. The distribution adapters (404b) are similarly utilized to mate with the fibers of the distribution input cables. Further, this stair-shaped design, in combination with the increased width of the first step portion (4121), allows for highly efficient utilization of vertical space within the enclosure, enabling high-density fiber management while ensuring clear functional separation between the feeder and distribution networks.

In accordance with an embodiment of the present disclosure, a vertical offset between adjacent step portions, defined by the height of the riser portions (430), is maintained in a range of 10-13 mm (preferably 11 mm to 12.5 mm), and is preferably about 11.7 mm. This range is effective for maximizing both operational efficiency (easy connector access) and spatial efficiency (high port density). This height range ensures adequate vertical clearance for connector manipulation and fiber bend radius protection.

In accordance with an embodiment of the present disclosure, the fibers utilized in the system are of the G.657.A2 type, which has a Minimum Bend Radius 7.5 mm (or 5 mm). Testing has demonstrated that a riser height below 10 mm forces the routed fiber into a bend radius tighter than the minimum bend radius, specifically resulting in unacceptable signal degradation. By maintaining the offset at 10 mm or above, the design protects the fiber and allows for the use of standard LC connectors without requiring specialized, high-cost, small-form-factor connectors (such as push-pull type LC connectors).

In accordance with an embodiment of the present disclosure, the vertical offset between the step portions may be a linear Offset defining the multi-tiered adapter frame (402) as a classical stair-step arrangement, where each step portion (412) is in offset by fixed vertical riser portion (430) of 10-13 mm (preferably 11 mm to 12.5 mm). Further, the vertical offset between the step portions may be defined by a single, continuously curved surface (such as an arc or parabolic profile), ensuring the required step portion separation is achieved across a smooth transition to prioritize bend radius control. The curvature is defined by a radius of curvature maintained between 8 mm to 9 mm (minimum), which prevents abrupt transitions that would violate 7.5 mm (or 5 mm) minimum bend radius and compromise connector accessibility. Radius of curvature below 8 mm may increase bending losses. Radius of curvature above 10 mm may cumulatively increase the size of the multi-tiered adapter frame.

In accordance with an embodiment of the present disclosure, the vertical offset between the step portions may be defined as the angled riser portion, having an offset angle (θ) with respect to the adjacent step portion. The curvature of the riser portion is defined to maintain a minimum bend radius (R) for the optical fiber of at least 7.5 mm (or 5 mm), corresponding to the minimum allowable bend radius for a G.657.A2 optical fiber. Further, the offset angle (θ) is maintained within a range of 5° to 60°, thereby providing a compact yet safe routing path for the fibers. When the angle θ is less than 5°, the riser portion becomes excessively shallow, resulting in an increased horizontal footprint. Conversely, when the angle θ exceeds 60°, the curvature becomes excessively steep, leading to a reduction in the effective bend radius around 7.5 mm (or preferably around 5 mm) and inducing micro-bending stress or optical attenuation in the fiber.

Accordingly, the preferred range of the offset angle θ is 10° to 50°, which provides an optimal balance between compact design, manufacturability, and mechanical safety. Within this range, the curvature radius (Rs) of the riser portion may be between 8 mm and 10 mm, ensuring that the fiber bend radius (Rc) remains equal to or greater than 7.5 mm (or preferably 5 mm).

In accordance with an embodiment of the present disclosure, a plurality of single-piece integrated adapter blocks (404) are arranged on each step portion (412) such that each single-piece integrated adapter block (404) is mounted perpendicularly relative to the surface of the step portion. Further, this configuration ensures that all adapter ports are accessible from a common front access direction, eliminating the accessibility issues of prior art.

In accordance with an embodiment of the present disclosure, the mounting angle is perpendicular, wherein the central axis of the adapter block (404) is oriented substantially at 90° to the plane of the step portion (412). Alternatively, the mounting angle (θm) is angled, being oriented at approximately 80° or 100° relative to the step portion (412). These angled configurations enable the adapter ports (422a) of the adapter block (404) to face toward a front access direction (A) of the assembly, allowing users to perform insertion, removal, and inspection operations from the front side without disturbing adjacent connections.

In accordance with an embodiment of the present disclosure, the single-piece integrated adapter block (404) is mounted on a curved or non-linear mounting surface, wherein the curvature is defined along an arc or contoured profile that gradually transitions between the riser portion (430) and the step portion (412). The curved mounting configuration provides a smooth alignment path for the incoming or outgoing optical fiber, maintaining the required minimum bend radius (e.g., 7.5 mm (or 5 mm) for G.657.A2 fibers) while preserving a compact geometric profile.

In accordance with an embodiment of the present disclosure, the multi-tiered adapter frame (402) is dimensioned to maximize density while accommodating necessary mounting hardware and specialized adapter blocks.

In accordance with an embodiment of the present disclosure, the width of the first step portion (4121) is between 49 mm and 53 mm, preferably about 51 mm, and the width of the last step portion is preferably about 31 mm. A width below 49 mm for the first step portion would create a crowded region, making it difficult to accommodate the mounting features (414) along with two single-piece integrated adapter blocks (404), and a width below 31 mm for the last step portion would similarly create a crowded region for providing the mounting feature (414) along with its corresponding adapter block (404).

Further, greater widths of the first and last step portions compared to the other step portions are important. This increased width allows mounting features (414) (for attaching the frame to the housing) to be provided directly on the step portion without requiring additional risers or steps, thereby saving vertical space. Further, the wider first step portion (4121) allows for the mounting of two single-piece integrated adapter blocks. In a splitter embodiment, one adapter block is used as a splitter input, and the remaining adapter blocks are used for splitter outputs, efficiently maximizing port count within the frame size.

Fig. 8 is a pictorial snapshot illustrating a perspective view of the fiber enclosure (300) before mounting the multi-tiered adapter frames (402). It includes a feeder breakout assembly (306a) for a feeder input cable (e.g.,2X12 fiber IBR segments) and a distribution breakout assembly (306b) for a distribution input cable (e.g., a 288-fiber cable with 24X12 fiber IBR segments). Each assembly manages its respective cable type.

In accordance with an embodiment of the present disclosure, the feeder fanout unit (310) is coupled directly to the feeder breakout assembly (306a) and provides individual fiber output for further termination. Further, the feeder fanout unit (310) provides a 2*24F fanout output.

In accordance with an embodiment of the present disclosure, the distribution fanout unit (312) is coupled to a splicing region (600) using an IBR bundle segment (206) and provides individual fiber fanout as output for further termination. Further, the distribution fanout unit (312) provides a 3*24F fanout output.

In accordance with an embodiment of the present disclosure, the IBR bundle segments exiting from the distribution breakout assembly (306b) are routed towards the splicing region (600) provided on the base (302) of the fiber enclosure (300). In particular, the splicing region (600) is equipped with splice trays or holders (318) to securely position the fibers during the splicing process. Further, the trays are used to accommodate both single and mass fusion splices, providing flexibility in splicing operations.

In accordance with an embodiment of the present disclosure, the distribution fanout unit (312) is configured to receive optical fibers or ribbons directly from a distribution input cable or from the distribution breakout assembly (306) and separate the same into individual fibers. In particular, the distribution fanout unit (312) may include features such as strain relief and protective tubing to ensure the fibers are not damaged during the separation process. Further, the design of the fanout unit with an integrated cable spool ensures that the fibers are routed with minimal bending and stress, maintaining the integrity of the optical signal.

Fig. 9 is a pictorial snapshot illustrating the fanout unit (310, 312), which has a housing with an opening (322) sized to receive an IBR bundle segment and a plurality of through holes (324) sized to output individual fibers. In particular, the feeder fanout and the distribution fanout utilize fanout units that have a similar structural design for their housings. The defining difference between the resulting feeder fanout unit (310) and the distribution fanout unit (312) is the total number of fanout units incorporated into each.

For example, a feeder fanout unit (310) may be defined by two fanout units, while a distribution fanout unit (312) may be defined by three fanout units.

In accordance with an embodiment of the present disclosure, a cable spool (not shown) is fixed within the housing of the fanout units (310, 312) and having a central core around which a portion of the IBR bundle segment is wound to provide manageable slack. Further, the cable spool also has radial slots designed to separate the fiber bundle into individual fibers or small groups, ensuring organized fanout. These functionalities of compact cable storage and orderly fiber separation within a single component improve cable management.

In accordance with an embodiment of the present disclosure, the cable spool has a cylindrical shape with an annular groove forming the central core for winding the cable. Further, radial slots are formed on an outer flange of the spool, extending outward to provide organized pathways for the individual fibers. This geometry optimizes space utilization and enables a smooth transition from the wound cable to separated fibers.

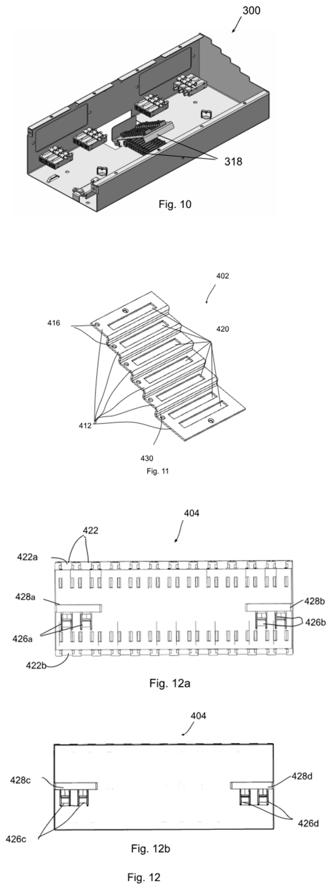

Fig. 10 is a pictorial snapshot illustrating a perspective view of the fiber enclosure (300) representing internal splicing components according to embodiments disclosed herein. The plurality of splice holder plates (318) pivotably connected to each other in a vertically stacked manner. In particular, each splice holder plate (318) includes a plurality of splice holders configured to secure spliced optical fibers. Further, the stacked splice holder plates (318) allow access to individual splice holder plates by pivoting the plates relative to one another, facilitating mass fusion splicing operations. The design of the splice holder plates ensures that the fibers are securely held in place during splicing, reducing the risk of damage or signal loss. In an embodiment, each splice holder is configured to store or protect mass fusion splicing of 4N fibers, where N is an integer between 1 and 10.

In accordance with an embodiment of the present disclosure, the mass fusion splicing process is carried out using a stacked splice holder plate (318) designed to accommodate and protect multiple optical fiber splices in a compact and organized arrangement. In particular, each splice holder plate (318) comprises a plurality of individual splice holders, each configured to secure one or more optical fibers during and after the fusion splicing operation. Moreover, the splice holders are arranged along the splice holder plate (318) to facilitate efficient fiber routing and to maintain consistent fiber alignment and bend radius control. Further, the plates are mounted in a stacked configuration, wherein adjacent splice holder plates are pivotally coupled, enabling selective access to any individual plate by pivoting it relative to the others. This pivoting mechanism allows for ergonomic handling and easy inspection or maintenance of specific splices without disturbing neighboring fibers or plates.

In accordance with an embodiment of the present disclosure, during the mass fusion splicing process, corresponding sets of optical fibers are prepared by stripping, cleaning, and cleaving their ends to ensure precise alignment. The prepared fibers are then positioned within the splice holders.

In accordance with an embodiment of the present disclosure, a mass fusion splicer is used to simultaneously fuse multiple fibers, typically in sets of four (4N fibers, where N is an integer between 1 and 10), using controlled electric arc heating to melt and join the fiber ends with high precision. The use of the 4N configuration allows for efficient batch processing, significantly reducing splicing time while maintaining high optical performance and low splice loss.

Once fusion is complete, the spliced fibers are carefully placed into the corresponding splice holders, where they are secured to prevent movement or mechanical stress. The stacked and pivotable arrangement of splice holder plates further enhances accessibility, enabling technicians to perform mass splicing, inspection, and rework operations with minimal handling of the fiber bundle. This design minimizes the risk of fiber damage or signal degradation and optimizes workflow efficiency in high-density fiber management systems.

Fig. 11 is a pictorial snapshot illustrating a perspective view of a multi-tiered adapter frame according to embodiments disclosed herein. In particular, the multiple multi-tiered adapter frames (402) (collectively and interchangeably referred to as the adapter frame (402)) include a plurality of step portions (4121-412n) (collectively referred to as 412) separated by riser portions (430). In accordance with an embodiment of the present disclosure, the step portions (412) are used to accommodate standard optical adapters, with each step providing a secure mounting point for the adapters. In particular, a plurality of openings (420) are provided on the step portions (412) where each of the openings (420) are configured to receive a single-piece integrated adapter block (404).

Fig. 12a is a schematic representation illustrating a front view of a single-piece integrated adapter block (404) according to embodiments disclosed herein. The single-piece integrated adapter block (404) is a unitary molded optical component configured for high-density fiber termination applications. This adapter block provides a compact solution for managing multiple optical fiber connections within a limited space while maintaining accessibility and serviceability. The unitary construction of the adapter block ensures consistent performance and reduces the risk of misalignment or damage during installation and maintenance. The high-density design allows for use of space in data centers and telecommunications closets, where space is often at a premium. Additionally, the integrated design minimizes the number of components, reducing the potential points of failure and simplifying inventory management.

In accordance with an embodiment of the present disclosure, the single-piece integrated adapter block (404) includes a plurality of sub adapters (422) arranged in a linear configuration. Each sub adapter (422) functions as a dual-port adapter configured to receive and align two optical connectors for optical coupling. These sub adapters (422) are integrally molded as part of the single-piece construction, eliminating the need for individual adapter mounting and alignment during installation. The dual-port configuration of each sub adapter allows for use of space while providing robust and reliable connections. The integrally molded design ensures precise alignment of the optical connectors, which is used for maintaining low insertion loss and high return loss in optical networks.

In accordance with an embodiment of the present disclosure, the linear arrangement of the sub adapters facilitates easy access and management of the optical connections, making it easier for technicians to perform maintenance and upgrades. Further, the single-piece integrated adapter block offers significantly greater structural rigidity compared to a row of small, interconnected adapters. This makes the adapter block more resistant to physical stress, vibration, and accidental impact during installation or maintenance. The adapter block allows for the tightest possible port spacing because the entire housing structure is accounted for in one mold design. This maximizes the number of ports that can fit onto the specific dimensions of your inventive multi-tiered step portion. By eliminating individual housing walls, retention clips/tabs, the single-piece integrated adapter block minimizes the non-functional space between ports. This results in a tighter physical width, maximizing the utilization of the available step width 25.7 mm (for example) and achieving a port density increase of approximately 10% to 15% compared to using individual adapters.

In accordance with an embodiment of the present disclosure, the single-piece integrated adapter block (404) includes at least twelve sub adapters (422) arranged in a horizontal row. In different embodiments the single-piece integrated adapter block (40) may include at least eight sub adapters (422). Each sub adapter (422) includes a first adapter port (422a) positioned on a first side of the adapter block (404) and a second adapter port (422b) positioned on a second side of the adapter block (404) opposite to the first side. The first adapter port (422a) and the second adapter port (422b) are aligned along an optical axis to enable optical coupling between two fiber optic connectors inserted from opposite sides.

In accordance with an embodiment of the present disclosure, the second adapter port (422b) is configured to face toward a base (302 of the fiber enclosure (300)) when the single-piece integrated adapter block (404) is mounted on a step portion (412) of the multiple multi-tiered adapter frames (402). Further, the second adapter port (422b) receives optical fibers extending from fanout units (310, 312) mounted on the base (302 of the fiber enclosure (300)).

In accordance with an embodiment of the present disclosure, the first adapter port (422a) is configured to face toward a cover (314) or front access direction (A) of the fiber enclosure (300), enabling technicians to connect patch cords or splitter inputs from the front side of the fiber enclosure (300). The orientation of the adapter ports (422a, 422b) ensures that the optical fibers are routed in an organized manner, reducing the risk of tangling and damage. The step portion mounting provides a clear and unobstructed path for the optical fibers, ensuring that they maintain the proper bend radius and minimizing signal loss. The front access design allows for easy monitoring and maintenance of the connections.

In accordance with an embodiment of the present disclosure, the single-piece integrated adapter block (404) further includes integrated mounting features configured to enable tool-free installation and removal from a step portion of a multi-tiered adapter frame (402). The integrated mounting features include a plurality of tabs (426a, 426b, 426c, 426d) and a plurality of projections (428a, 428b, 428c, 428d) allowing snap-fit mounting onto a respective step portion (412) of the multi-tiered adapter frame (402).

In accordance with an embodiment of the present disclosure, the tabs (426a, 426b) and the projections (428a, 428b) are provided on the front side of the single-piece integrated adapter block (404) as shown in Figure 12a, while the other of the tabs (426c, 426d) and projections (428c, 428d) are provided on the back side of the single-piece integrated adapter block (404) as shown in Figure 12b. The tool-free design simplifies the installation process, reducing the time and effort required to mount the adapter block. The integrated mounting features also ensure a secure and stable connection, minimizing the risk of the adapter block becoming dislodged or misaligned during operation.

In accordance with an embodiment of the present disclosure, these tabs (426a, 426b, 426c, 426d) establish a snap-fit locking mechanism within the opening (420) defined by the step portion (412) when the single-piece integrated adapter block (404) is inserted perpendicularly into the opening (420). The tabs (426) are used to flex during insertion and then return to their original position once fully inserted, creating a secure mechanical lock. In particular, the snap-fit mechanism ensures that the adapter block is securely mounted, minimizing the risk of it becoming dislodged or misaligned during operation. The flexible design of the tabs allows for easy installation and removal, making it simple for technicians to perform maintenance and upgrades. Further, the snap-fit locking mechanism also provides a tactile and audible indication of secure mounting, ensuring that the adapter block is consistently positioned perpendicular to the step portion.

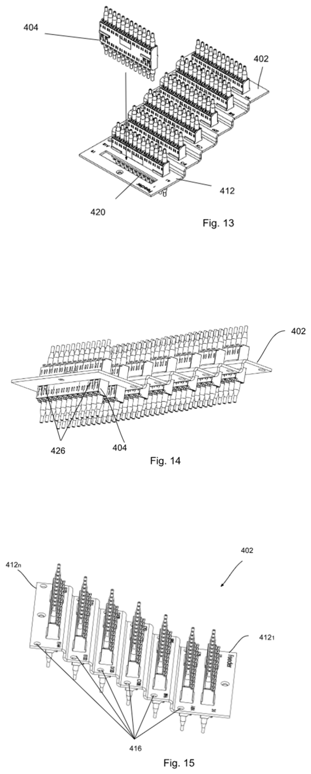

Fig. 13 and Fig. 14 are pictorial snapshots illustrating a perspective view mounting of a single-piece adapter block (404) onto a step portion (412) of a multi-tiered adapter frame (402) in accordance with an aspect of the present disclosure. The integrated mounting features include a plurality of tabs (426a, 426b, 426c, 426d) and a plurality of projections (428a, 428b, 428c, 428d) allowing snap-fit mounting onto the respective step portion (412). As shown in Figures 14a and 14b, the tabs (426a, 426b) and projections (428a, 428b) are provided on the front side, while the other tabs (426c, 426d) and projections (428c, 428d) are provided on the back side. During the mounting process, the single-piece integrated adapter block (404) is inserted perpendicularly to the opening (420) provided on the step portion (412). In this process, the tabs flex and pass through the opening while the projections stay outside the opening. When fully aligned, the tabs return to their actual position and generate an audible feedback to indicate proper alignment.

Now referring to Fig. 15 illustrating another perspective view of the multi-tiered adapter frame (402) illustrating attachment features (416) provided on each step portion for removably attaching cable routing fingers (418). In particular, the cable routing fingers (418) provide organized pathways for the fibers, preventing tangling and ensuring that the fibers are routed with minimal bending and stress.

Further, the vertical offset between step portions (412) creates sufficient clearance for technicians to access every individual port without obstructing adjacent ports.

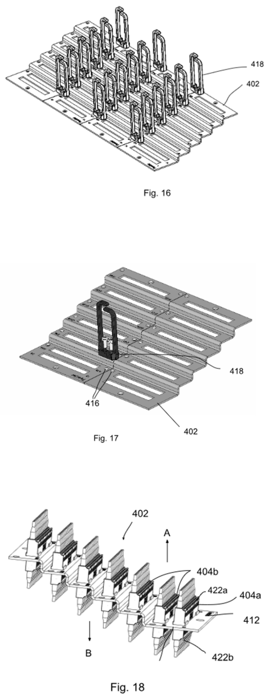

Fig. 16 and Fig. 17 are schematic representations illustrating views of multiple multi-tiered adapter frames (402) showing cable routing fingers (418) arranged in a vertically offset manner according to embodiments disclosed herein. In particular, the fiber enclosure (300) of the present disclosure includes a plurality of multi-tiered adapter frame (402) with a plurality of step portions (412) configured to mount single-piece integrated adapter blocks. Moreover, cable routing fingers (418) are provided on each step portion (412) to guide and secure optical fibers while maintaining proper bend radius control. Further, the cable routing fingers (418) ensure that the optical fibers are routed in an organized manner, reducing the risk of tangling and damage. The proper bend radius control provided by the cable routing fingers (418) minimizes signal loss and distortion, ensuring that the optical network operates at peak performance. The vertically offset arrangement of the cable routing fingers (418) ensures that the optical fibers are routed in a clear and unobstructed path, making it easy for technicians to perform maintenance and upgrades.

In accordance with an embodiment of the present disclosure, the cable routing fingers (418) are configured for removable attachment to the multi-tiered adapter frames (402). Specifically, each step portion (412) of the multi-tiered adapter frame (402) includes at least one attachment feature (416) as shown in Figure 16, such as a receiving aperture or a threaded port. Moreover, each cable routing finger (418) has a base from which two parallel, vertical fingers extend, defining a channel for guiding optical fibers. The base of the routing finger (418) is provided with two distinct mounting apertures. Further, this specific two-aperture configuration enables the secure mounting of the cable routing fingers (418) while simultaneously ensuring the precise interlocking of adjacent adapter frames (402) within the fiber enclosure (300).

A first aperture of the cable routing finger (418) base is sized and configured to mate with an attachment feature (416) located on a step portion (412) of a first adapter frame (402). A second aperture of the routing finger (418) base is sized and configured to mate with an attachment feature (416) located on an adjacent step portion (412) of a second, adjacently arranged adapter frame (402). Further, the routing fingers (418) are removably secured to the adapter frame step portions (412) using fastening means, such as screws or other suitable mechanical fasteners (as shown in Figure 18). This arrangement provides a dedicated routing path for the optical fibers while establishing a secure mechanical link between adjacent frames (402). The removable nature of the routing fingers (418) permits technicians to easily customize the routing configuration and simplifies maintenance procedures.

In accordance with an embodiment of the present disclosure, each cable routing finger (418) manages only the patch cables or fibers connected to the adapter block on the corresponding step portion (412). These cable routing fingers (418) act as localized anchor points, preventing slack or tension from building up along fiber paths. If a patch cable is accidentally pulled, strain is absorbed by the nearest finger, protecting the connection point at the adapter block. The localized management reduces cable entanglement and simplifies the process of tracing, adding, or removing a specific patch cable without disrupting connections on adjacent tiers. The cable routing fingers (418) prevent fibers from being pushed, pinched, or inadvertently bent into a tight radius during the installation of subsequent cables or the closing of an enclosure cover.

Fig. 18 illustrates a multi-tiered adapter frame (402) that serves as a structured platform for fiber management and connectivity. This frame incorporates single-piece integrated adapter blocks (404) mounted on step portions.

This provides an organized means for connecting optical fibers from both the feeder fanout unit (310) and the distribution fanout unit (312) to the adapter ports of the blocks (404). Additionally, the frame facilitates the connection of splitter cassettes (408) for signal distribution. The tiered structure ensures that optical fibers are routed in an organized manner, minimizing the risk of tangling and damage.

In accordance with an embodiment, each step portion (412) of the multi-tiered adapter frame (402) supports at least one single-piece integrated adapter block (404). These blocks incorporate dual-port sub-adapters (422). Each sub-adapter has a first port (422a) facing the front access direction (A) and a second port (422b) facing the base (302). The second ports (422b) of the feeder (404a) and distribution (404b) adapter blocks are configured to connect with fibers extending from their respective feeder fanout units (310) and distribution fanout units (312).All fanout units (310, 312) are mounted on the base (302) substantially beneath the multi-tiered adapter frame (402). This positioning minimizes the fiber routing distance, maintaining proper bend radius control, ensuring segregated routing, and minimizing optical signal loss and distortion. This optimized arrangement also facilitates precise fiber slack management and efficient space utilization within the fiber enclosure (300).

Fiber lengths are tightly controlled based on the fanout unit type. The length of fibers connecting the feeder fanout unit (310) to the feeder adapter ports (422b) is maintained between 260 mm and 470 mm. The 470 mm maximum accommodates configurations where a single fanout unit serves multiple adapter frames, while the 260 mm minimum applies when a dedicated fanout unit is mounted directly below the frame. In contrast, fibers from the dedicated distribution fanout units (312) are constrained to a shorter range of 260 mm to 280 mm, ensuring the minimal length required for maintenance slack is provided without introducing excessive slack.

In further embodiment of the present disclosure, splitter cassette (408) inputs connect to the feeder adapter block (404a) ports (422a), receiving signals from feeder fanout units (310). Outputs of the cassettes connect to the distribution adapter block (404b) ports (422a). This setup allows for signal division (e.g., 1X8 to 1X64) and routing to distribution fanout units (312), managing network scaling.

In accordance with an embodiment of the present disclosure, the fiber enclosure (300) manages input cables with a high fiber count disparity (ratio of 1:2 to 1:64, preferably 1:12 to 1:24), accommodating both lower (e.g., 12-fiber) and higher (e.g., up to 576-fiber) density cables. This allows integration of feeder and distribution cables while maintaining organization and bend radius.

Advantageously, the present invention reliably manages high fiber density (up to 1:64 ratio) by employing three key features to overcome bending and tangling issues: (1) A multi-tiered adapter frame (402) with vertically offset geometry ensures full port accessibility. (2) Vertically offset cable routing fingers (418) maintain bend radius control adjacent to the ports. (3) The use of G.657.A2 fiber (Min. Bend Radius 5 mm to 7.5 mm) facilitates compact, lowattenuation routing. The 1X64 split ratio is a practical upper limit due to insertion loss concerns.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A fiber enclosure (300) for receiving and managing a plurality of optical fibers, **characterized in that**:
a housing defining an interior volume, wherein the housing comprises a base (302), a plurality of sidewalls (304) extending from the base (302), and a cover (314) coupled to the base (302);
a plurality of input ports (308) provided on at least one of the sidewalls (304), wherein the plurality of input ports (308) are configured to receive a plurality of input cables (202) having the plurality of optical fibers arranged in a plurality of optical fiber bundles, wherein the plurality of input cables (202) is made of optical fibers configured to bend up to 7.5 mm (or 5 mm) radius without substantial optical signal deterioration;
a plurality of fanout units (310, 312) disposed within the housing, wherein each of the fanout units (310, 312) is configured to receive at least one of the pluralities of optical fiber bundles and divide the received optical fiber bundle into a plurality of individual optical fibers; and
a multi-tiered adapter frame (402) defining a stair arrangement removably mounted within the housing, wherein the multi-tiered adapter frame (402) comprises:
a plurality of horizontally-extending step portions (412) separated by vertically-extending riser portions (430), wherein each of the horizontally-extending step portions (412) lie in a plane offset from adjacent horizontally-extending step portions (412); and
a plurality of optical fiber adapters (404) mounted on the plurality of horizontally-extending step portions (412), wherein each optical fiber adapter (404) is oriented such that a plurality of adapter ports (422a) face a common front access direction (A), the mounting angle of each adapter port (422a) relative to its step portion (412) is between 80° to 110°, wherein the vertically-extending riser portions (430) is one of angled (between 45° and 135° relative to the step portion), and curved (a non-linear mounting surface).

2. The fiber enclosure (300) as claimed in claim 1, wherein the stair arrangement defines a vertical offset between adjacent step portions (412) in a range of 10 mm to 13 mm, and a step depth in a range of 15 mm to 26.5 mm, the dimensions being configured to maintain a bend radius of about 7.5 mm (or preferably about 5 mm) for optical fibers routed from rear to front of the adapters while enabling front access to all adapter ports.

3. The fiber enclosure (300) as claimed in claim 1, wherein the plurality of input cables (202) comprises at least one first input cable and at least one second input cable.

4. The fiber enclosure (300) as claimed in claim 3, wherein the second input cable is a higherdensity fiber cable than the first input cable, and wherein a ratio of the fiber count of the first input cable to the second input cable is in a range of 1:2 to 1:64 (preferably 1:4 to 1:32, more preferably 1:12 to 1:24).

5. The fiber enclosure (300) as claimed in claim 3, wherein the at least one first input cable is a feeder cable and the at least one second input cable is a distribution cable.

6. The fiber enclosure (300) as claimed in claim 1, wherein each of the plurality of optical fiber adapters (404) is a single-piece integrated adapter block (404).

7. The fiber enclosure (300) as claimed in claim 6, the single-piece integrated adapter block (404) is removably mounted on the respective step portion (412) of the adapter frame (402).

8. The fiber enclosure (300) as claimed in claim 6, wherein the single-piece integrated adapter block (404) comprises a plurality of sub adapters (422) in the range of 8 to 12, and the plurality of sub adapters (422) are integrally molded.

9. The fiber enclosure (300) as claimed in claim 1, wherein the plurality of input cables (202) comprises at least one intermittently bonded ribbon (IBR) bundle (204₁, 204₂,...204ᵢ, ...204ₙ), wherein each IBR (208) comprises a plurality of optical fibers (210₁, 210₂, ... 210ᵢ, ... 210ₙ) such that adjacent optical fibers are bonded intermittently with a matrix material in a staggered bonding pattern.

10. The fiber enclosure (300) as claimed in claim 9 further comprises a plurality of breakout assemblies (306a, 306b) disposed within the fiber enclosure (300) and coupled to the plurality of input ports (308), wherein each breakout assembly (306a) comprises a housing having a first opening (804) configured to receive an IBR bundle (204) from at least one of the input cables (202), and a plurality of through holes (806) to output an IBR bundle segment (206) of the IBR bundle (204) housed within a plurality of furcation tubes, while preserving the intermittent bonding between the adjacent fibers.

11. The fiber enclosure (300) as claimed in claim 1, wherein the plurality of fanout units (310, 312) includes at least one feeder fanout unit (310) mounted on the base (302) and disposed substantially beneath the adapter frame (402), and wherein the adapter frame (402) includes a plurality of feeder adapter ports the configuration is adapted to maintain a length of the individual optical fibers extending from the at least one feeder fanout unit (310) and mated with the feeder adapter ports within a range of 260 mm to 470 mm.

12. The fiber enclosure of claim 1, wherein each step portion (412) comprises at least one attachment feature for removably receiving a cable routing finger (418), the routing fingers (418) on adjacent step portions being vertically offset to guide fibers in a non-overlapping manner.

13. An adapter frame (402) for a fiber enclosure, comprising:
a multi-tiered body defining a stair arrangement with step portions (412) separated by risers (430), wherein at least a first and a last step portion (4121, 412n) have a width greater than intermediate step portions;
a plurality of single-piece adapter blocks (404) snap-fitted to each step portion; and
mounting features (414) on the first and last step portions for removable attachment within the enclosure.

14. The adapter frame (402) as claimed in claim 12, wherein one of the first and last step portions (4121, 412n) having greater width to mount at least two single-piece integrated adapter blocks, one of which is a feeder adapter block.

15. An adapter frame (402) for a telecommunications enclosure (300) **characterized in that**:
a body being a multi-tiered frame that defines a stair arrangement, wherein the body comprises a plurality of step portions (412) separated by riser portions (430), wherein each step portion (412) lies in a plane vertically offset from adjacent step portions (412);
a plurality of adapters (404) mounted on each step portion, wherein each adapter (404) is mounted perpendicular to a surface of the step portion; and
at least one attachment feature provided on each of the step portions (412), wherein the at least one attachment feature is configured to removably receive a cable routing finger (418), wherein each of the cable routing fingers (418) is vertically offset from the cable routing fingers provided on the adjacent step portion (412).
